# EUROPÄISCHE PATENTSCHRIFT

(11) **EP 2 732 334 B1**
(45) Veröffentlichungstag und Bekanntmachung des Hinweises auf die Patenterteilung: **13.06.2018**
(21) Anmeldenummer: 12740515.7
(22) Anmeldetag: 03.07.2012
(51) Int. Cl.: G03B 15/06, G03B 17/53

(54) **VORRICHTUNG UND VERFAHREN ZUR ERFASSUNG BIOMETRISCHER MERKMALE**
DEVICE AND METHOD FOR CAPTURING BIOMETRIC IDENTIFIERS
DISPOSITIF ET PROCÉDÉ POUR ACQUERIR DES IDENTIFIANTS BIOMÉTRIQUES

(30) Priorität: 15.07.2011 DE 102011079285
(43) Veröffentlichungstag der Anmeldung: 21.05.2014
(73) Patentinhaber: Bundesdruckerei GmbH, 10958 Berlin (DE)
(72) Erfinder: WOLF, Andreas, 07743 Jena (DE)
(74) Vertreter: Richardt Patentanwälte PartG mbB
(86) Internationale Anmeldenummer: PCT/EP2012/062921
(87) Internationale Veröffentlichungsnummer: WO 2013/010786

(56) Entgegenhaltungen:
- WO-A-88/02500
- DE-A1- 3 809 168
- FR-A1- 2 689 355
- GB-A- 532 455
- GB-A- 2 201 801

## Beschreibung

Die Erfindung betrifft eine Vorrichtung zur Erfassung biometrischer Merkmale eines Gesichts einer Person und ein Verfahren zur Erfassung biometrischer Merkmale eines Gesichts einer Person.

Aus dem Stand der Technik sind verschiedene Datenerfassungssystem zur Erfassung biometrischer Merkmale eines Gesichts einer Person bekannt. ISO 19794-5 stellt dabei verschiedene Anforderungen an die zu erfassenden Gesichtsbilder. Daraus ergibt sich z.B., dass für gute Ergebnisse biometrischer Vergleichsalgorithmen für Gesicht und Iris die entsprechenden Kameraaufnahmen so frontal wie möglich erfolgen sollten.

Bekannte Systeme wie EasyPASS verwenden hierzu eine Bewegung, d.h. Verschiebung des gesamten Aufnahmesystems um eine geeignete Positionierung der Kamera zu realisieren. Das Smartgate-System schlägt stattdessen die Verwendung mehrerer Kameras vor. Alle diese Lösungen sind entweder teuer und wartungsintensiv oder Kompromisse im Hinblick auf die anzustrebende frontale Aufnahme.

Die Druckschriften DE 38 09 168 A1 und WO 88 02500 A1 zeigen weitere fotografische Aufnahmeeinrichtungen, mit denen der zu Porträtierende sein Aussehen beim Auslösen der Kamera überwachen kann. Dazu ist jeweils der Kamera ein dem Aufnahmeobjekt zugekehrter, halbdurchlässiger Spiegel vorgelagert, der sich senkrecht zum Strahlengang erstreckt. Außerdem ist in beiden Druckschriften eine gerade Anzahl von Umlenkspiegeln vorgesehen, um zu gewährleisten, dass der Betrachter sein gewohntes, nicht seitenverkehrtes Spiegelbild bei der Aufnahme sieht.

Noch weitere fotografische Aufnahmeeinrichtungen für vergleichbare Anwendungen offenbaren die Druckschriften GB 532 455 A, GB 2 201 801 A und FR 2 689 355 A.

Dem gegenüber liegt der Erfindung die Aufgabe zugrunde, eine verbesserte Vorrichtung zur Erfassung biometrischer Merkmale eines Gesichts einer Person und ein verbessertes Verfahren zur Erfassung biometrischer Merkmale eines Gesichts einer Person bereitzustellen.

Die der Erfindung zugrunde liegenden Aufgaben werden mit den Merkmalen der unabhängigen Patentansprüche gelöst. Bevorzugte Ausführungsformen der Erfindung sind in den abhängigen Patentansprüchen angegeben.

Es wird eine Vorrichtung zur Erfassung biometrischer Merkmale eines Gesichts einer Person geschaffen, wobei die Vorrichtung eine Kamera zur Erfassung der biometrischen Merkmale und einen semi-transparenten Spiegel aufweist, wobei der semi-transparente Spiegel im Strahlengang zwischen der Person und der Kamera angeordnet ist, wobei der semi-transparente Spiegel so ausgerichtet ist, dass auf der Person zugewandten Seite des Spiegels der Strahlengang von auf den semi-transparenten Spiegel einfallenden Lichts parallel ist zum Strahlengang des vom semi-transparenten Spiegel zurück reflektierten Teil dieses Lichts. Ferner umfasst die Vorrichtung eine erste und eine zweite Spiegelanordnung, wobei die zweite Spiegelanordnung auf der von der Person abgewandten Seite des semi-transparenten Spiegels so angeordnet ist, dass der auf die zweite Spiegelanordnung fallende durch den semi-transparenten Spiegel transmittierte Teil des Lichts auf die erste Spiegelanordnung gelenkt wird, wobei die erste Spiegelanordnung so angeordnet ist, dass dieser auf die erste Spiegelanordnung gelenkte transmittierte Teil des Lichts auf die Kamera reflektiert wird. Schließlich ist die erste Spiegelanordnung und/oder die zweite Spiegelanordnung parallel verschiebbar zum Strahlengang des vom semi-transparenten Spiegel transmittierten Teil des Lichts zwischen der ersten Spiegelanordnung und der zweiten Spiegelanordnung. Dies eröffnet mehrere Möglichkeiten der optimalen Anpassung der Vorrichtung an die Position der Person vor dem semi-transparenten Spiegel:
So ist es z.B. nach einer Ausführungsform der Erfindung möglich, dass die erste Spiegelanordnung und die zweite Spiegelanordnung eine erste Kopplung aufweisen, wobei die erste Kopplung dazu ausgebildet ist, automatisch bei der Verschiebung der zweiten Spiegelanordnung die erste Spiegelanordnung so zu verschieben, dass der optische Abstand zwischen der zweiten Spiegelanordnung und der Kamera konstant ist.

Dadurch ist es möglich, die zweite Spiegelanordnung z.B. vertikal so zu verschieben, dass sich diese immer auf einer vorgegebenen Höhe relativ zur vertikalen Position des Gesichts der Person befindet. Dennoch weist das durch die Kamera erfasste Gesichtsbild eine konstante Größe auf, denn der optische Abstand zwischen der zweiten Spiegelanordnung und der Kamera ist konstant. Befindet sich also das Gesicht der Person vertikal etwas tiefer, kann die zweite Spiegelanordnung auf diese tiefere Gesichtsposition verschoben werden. Dadurch wird über die erste Kopplung auch das Anpassen der Position der ersten Spiegelanordnung bewirkt.

In diesem Zusammenhang sei darauf verwiesen, dass unter einem "semi-transparenten Spiegel" ein optisches Bauteil wie z.B. eine verspiegelte Glasplatte verstanden wird, welches eintreffendes Licht nur teilweise reflektiert und einen Teil des auftreffenden Lichts transmittiert.

Es sei darauf verwiesen, dass unter einer "Kopplung" allgemein eine beliebige Art von gegenseitiger automatischer Beeinflussung verstanden wird, welche sicherstellt, dass bei der Verschiebung der zweiten Spiegelanordnung auch die erste Spiegelanordnung entsprechend verschoben wird. Dies kann über eine rein mechanische Kopplung der Spiegelanordnungen erfolgen, oder es können Elektromotoren oder Aktuatoren zum Einsatz kommen, weiche aufgrund entsprechender Bestromung die Verschiebung der ersten Spiegelanordnung bewirken. Hierbei kann auch Computersoftware die Bestromung geeignet steuern.

Nach einer Ausführungsform der Erfindung ist die erste Spiegelanordnung bei konstanter Position der zweiten Spiegelanordnung automatisch so verschiebbar, dass der optische Abstand zwischen dem Gesicht der Person und der Kamera einem vorgegebenen Wert entspricht und/oder die Größe des durch die Kamera erfassten Gesichtsbildes der Person zur Erfassung der biometrischen Merkmale einem vorgegeben Wert entspricht.

Dies hat den Vorteil, dass unabhängig vom Abstand der Person vom semi-transparenten Spiegel und unabhängig von der Größe des Gesichts der Person ohne Ortsveränderung der Kamera Bilder konstanter Größe des Gesichtes aufgenommen werden können. Ist die Person also weiter entfernt von dem semi-transparenten Spiegel, wird die erste Spiegelanordnung in Richtung Kamera verschoben, so dass insgesamt der optische Abstand zwischen dem Gesicht der Person und der Kamera einem vorgegebenen Wert entspricht. Hat die Person ein sehr kleines Gesicht, ist es möglich, durch die Verschiebung der ersten Spiegelanordnung in Richtung Kamera den optischen Abstand zwischen dem Gesicht der Person und der Kamera so stark zu verkürzen, dass für die Kamera das Gesicht größer erscheint.

Nach einer weiteren Ausführungsform der Erfindung umfasst die Vorrichtung ferner eine Beleuchtungseinrichtung zur Beleuchtung der Person, wobei die Beleuchtungseinrichtung und die erste Spiegelanordnung eine zweite Kopplung aufweisen, wobei die zweite Kopplung dazu ausgebildet ist, automatisch bei der Verschiebung der ersten Spiegelanordnung das Leuchtverhalten der Beleuchtungseinrichtung zu steuern.

Dies hat den Vorteil, dass die Person unabhängig von ihrer Position relativ zum semi-transparenten Spiegel immer optimal ausgeleuchtet werden kann. Dadurch wird eine qualitativ hochwertige und zuverlässige Erfassung biometrischer Merkmale des Gesichts der Person gewährleistet. Eine Kopplung kann auch hier wiederum eine mechanische Kopplung sein, welche eine Verschiebung oder Verdrehung der Beleuchtungseinrichtung bewirkt. Möglich ist jedoch auch, dass die Verschiebung oder Verdrehung der Beleuchtungseinrichtung motorisch oder über Aktuatoren erfolgt, welche anhand der Verschiebung der ersten Spiegelanordnung gesteuert werden. Eine weitere Möglichkeit ist die Verwendung mehrerer Leuchtkörper innerhalb der Beleuchtungseinrichtung, welche in Abhängigkeit von der Position der ersten Spiegelanordnung getrennt angesteuert werden und somit z.B. über einen elektrischen Schaltmechanismus mit der ersten Spiegelanordnung gekoppelt sind.

ISO 19794-5 gibt empfohlene Winkel für die Beleuchtung bei der Aufnahme von Gesichtsbildern an. Dabei wird allerdings nicht berücksichtigt, ob und wie Reflektionen der Beleuchtungsquellen auf Brillengläsern sichtbar sind. Diese Reflexionen können die Qualität und Verwendbarkeit der Gesichtsbilder beeinträchtigen. Bei Irisbildern können die Bilder unverwendbar werden, wenn ein Reflex einer Lampe auf der Iris im Bild liegt. Aber auch Gesichtsbilder gewinnen an Qualität, wenn keine Reflexe in den Brillengläsern sichtbar sind. In vorhandenen Szenarien wie etwa beim Fotografen können Reflexe vermieden werden durch Neigen des Kopfes der zu fotografierenden Person. Dies wäre jedoch zur Gesichtserkennung kontraproduktiv, da hierfür frontale Aufnahmen benötigt werden.

Durch die Anpassung der Beleuchtungseinrichtung an die Position der ersten Spiegelanordnung wird indirekt eine Anpassung an die Position des Gesichts der Person bewirkt, da ja wiederum die Position der ersten Spiegelanordnung von der Position des Gesichts der Person abhängig ist, so dass eine optimale Gesichtsausleuchtung unter Vermeidung von Spiegelungen in Brillengläsern gewährleistet wird. Zusätzlich ist es noch möglich, z.B. eine computergesteuerte automatische Nachjustierung des Leuchtverhaltens der Beleuchtungseinrichtung in Abhängigkeit von Lichtreflexionen auf Brillengläsern vorzunehmen. Hierzu könnte an die Kamera ein entsprechendes Auswertungsmodul angeschlossen sein, welches aufgenommene Gesichtsbilder auf Brillenglasreflexionen untersucht und daraufhin ein Korrektursignal an die Beleuchtungseinrichtung sendet, um Reflexionen zu minimieren.

Es ist also möglich, über die Kopplung z.B. sowohl die räumliche Position von Leuchtmitteln, als auch z.B. ein selektives Aktivieren und Deaktivieren räumlich an verschiedenen Positionen befindlicher Leuchtmittel zu bewirken. Werden z.B. mehrere Sätze von Beleuchtungsquellen angebracht und der Reihe nach angeschaltet und Bilder über die Kamera aufgenommen, kann jenes Bild ausgewählt werden, das keine Reflexionen oder die geringsten Reflexionen enthält. Das Durchschalten der Beleuchtung und das Bewerten der Bilder erfolgt dabei vorzugweise automatisch.

Eine Ausführungsvariante könnte vorsehen, dass Beleuchtungsquellen im Abstand von fünf bis zehn Grad voneinander nach außen geführt angebracht werden, jeweils links und rechts von der gewünschten Gesichtsposition der Person, um ein symmetrisch ausgeleuchtetes Bild zu erreichen. Daraufhin können nacheinander Bilder aufgenommen werden, beginnend mit einer Ausleuchtung unter einem vordefinierten Winkel, vorzugsweise dem in der ISO 19794-5 empfohlenen Winkel für die Beleuchtung bei der Aufnahme von Gesichtsbildern. Für die nachfolgenden Bilder werden dann schrittweise nach innen und außen die Beleuchtungswinkel geändert, bis ein nahezu reflexfreies Bild erhalten wird. Damit wird der Aufnahmeaufwand minimiert bei Maximierung der Bildqualität.

In einem weiteren Aspekt betrifft die Erfindung ein Verfahren zur Erfassung biometrischer Merkmale eines Gesichts einer Person mittels einer Kamera zur Erfassung der biometrischen Merkmale und einem semi-transparenten Spiegel, wobei das Verfahren die Schritte aufweist: Anordnen des semi-transparenten Spiegels zwischen der Person und der Kamera, und Ausrichten des semi-transparenten Spiegel so, dass auf der Person zugewandten Seite des semi-transparenten Spiegels der Strahlengang von auf den semi-transparenten Spiegel einfallenden Lichts parallel ist zum Strahlengang des vom semi-transparenten Spiegel zurück reflektierten Teil dieses Lichts.

Im Folgenden werden bevorzugte Ausführungsformen der Erfindung anhand der Zeichnungen näher erläutert. Es zeigen:
- Fig. 1: eine schematische Ansicht einer Vorrichtung zur Erfassung biometrischer Merkmale,
- Fig. 2: eine schematische Ansicht einer Vorrichtung zur Erfassung biometrischer Merkmale in einer Einstellung für eine kleine Person,
- Fig. 3: eine schematische Ansicht einer Vorrichtung zur Erfassung biometrischer Merkmale in einer Einstellung für eine große Person.

Im Folgenden werden einander ähnliche Elemente mit denselben Bezugszeichen gekennzeichnet.

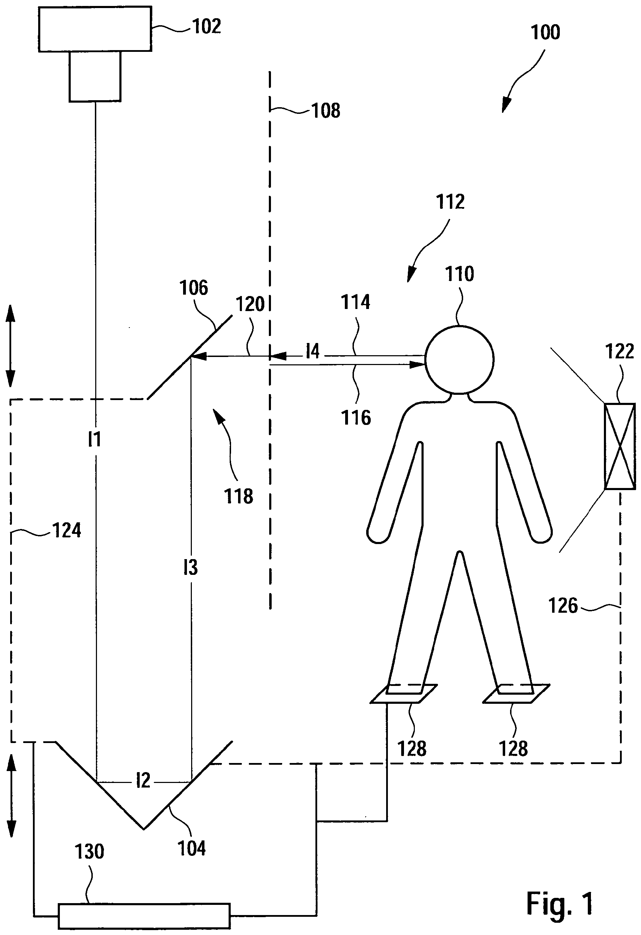

Die Figur 1 zeigt eine Vorrichtung 100 zur Erfassung biometrischer Merkmale eines Gesichts 110 einer Person. Die Vorrichtung 100 umfasst eine Kamera 102 zur Erfassung der biometrischen Merkmale und einen semi-transparenten Spiegel 108, wobei der semi-transparente Spiegel 108 zwischen der Person und der Kamera 102 angeordnet ist, wobei der semi-transparente Spiegel 108 so ausgerichtet ist, dass auf der Person zugewandten Seite 112 des semi-transparenten Spiegels 108 der Strahlengang 114 von auf den semi-transparenten Spiegel 108 einfallenden Lichts parallel ist zum Strahlengang 116 des vom semi-transparenten Spiegel zurück reflektierten Teil dieses Lichts.

Ferner umfasst die Vorrichtung 100 eine erste Spiegelanordnung 104 und eine zweite Spiegelanordnung 106, wobei die zweite Spiegelanordnung 104 auf der von der Person abgewandten Seite 118 des semi-transparenten Spiegels 108 so angeordnet ist, dass der auf die zweite Spiegelanordnung 106 fallende durch den semi-transparenten Spiegel transmittierte Teil 120 des Lichts auf die erste Spiegelanordnung 104 gelenkt wird, wobei die erste Spiegelanordnung so angeordnet ist, dass dieser auf die erste Spiegelanordnung 104 gelenkte transmittierte Teil des Lichts auf die Kamera 102 reflektiert wird.

Die Kamera 102 ist fest montiert mit Blick nach unten, da hierdurch der Staubeintrag auf die Kameralinsen minimiert wird. Im Strahlengang befinden sich die erste Spiegelanordnung 104, im vorliegenden Fall ein 180°-Doppel-Umlenkspiegel und die zweite Spiegelanordnung 106, im vorliegenden Fall ein 90°-Umlenkspiegel. Diese Spiegel 104 und 106 können vertikal verfahren werden, vorzugsweise über eine gemeinsame Steuerung, nämlich die Kopplung 124.

Bei einer Aufnahme von Iriden oder Gesicht 110 der Person P wird entlang des Strahlenganges I1, I2, I3 und I4 ein Bild eines biometrischen Merkmals aufgenommen. Dabei ist der Spiegel 106 vorzugweise so angeordnet, dass er exakt auf der Höhe des Gesichts 110 der Person positioniert ist. I1 wird nun so gewählt, dass die Länge I1+I2+I3+I4 stets einen konstanten Wert unabhängig von der vertikalen Position des Gesichts 110 hat.

Wird angenommen, dass das Gesicht 110 immer in der gleichen horizontalen Entfernung zur Vorrichtung 100 steht, wird der Spiegel 106 folglich die doppelte Strecke bewegt wie die Strecke, um welche der Spiegel 104 bewegt wird (I2 und I4 sind als konstant angenommen).

Die vertikale Position des Gesichts 110 und damit die Position des Spiegels 106 kann auf verschiedene Weise bestimmt werden: Möglich ist z.B. die Verwendung einer Lichtschranke an der Vorrichtung. Diese kann mit dem Spiegel 106 gekoppelt sein, wobei der Spiegel 106 so lange verfahren wird, bis das Gesicht 110 gerade die Lichtschranke berührt. Möglich ist auch die Verwendung einer separaten Kamera mit großem Gesichtsfeld, aus deren Bild die Gesichtsposition bestimmt wird. Eine weitere Möglichkeit ist das Abfahren eines großen Bereiches durch Bewegung des Spiegels 106 und Analyse des resultierenden, von der Kamera 102 aufgenommenen Videostreams. Aus diesem Videostream lässt sich dann die optimale Position des Spiegels 106 bestimmen.

Möglich ist auch, den Spiegel 104 bei konstanter Position des Spiegels 106 automatisch so zu verschieben, dass der optische Abstand I1+I2+I3+I4 zwischen dem Gesicht 110 der Person und der Kamera 102 einem vorgegebenen Wert entspricht. Es wird also die Länge I1+I2+I3+I4 konstant gehalten, indem der Spiegel 104 entsprechend der zu bestimmenden Entfernung !4 verfahren wird. Der Abstand I4 des Gesichts 110 vom Spiegel 106 kann auf verschiedene Weisen bestimmt werden: Möglich ist z.B. eine Triangulation mittels einer zusätzlichen doppeläugigen Kamera oder die Verwendung einer Ultraschall-Entfernungsmessung. Möglich ist auch eine Auswertung von Markierungen 128 auf dem Boden mittels einer zusätzlichen Kamera mit großem Gesichtsfeld oder Sensoren im Boden. Eine weitere Möglichkeit bietet z.B. die Anpassung der Gesichtsgröße an eine vorgegebene Einheitsgröße und daraus die Berechnung des Abstandes I4. Auch eine Auswertung der Scharfeinstellung am Objektiv, wenn die Schärfentiefe nicht zu groß ist, wäre denkbar.

ISO 19794-5 Annex C empfiehlt zur Gesichtserfassung Winkel, unter denen Personen für die Aufnahme von Gesichtsbildern beleuchtet werden sollten. Bei verschieden großen stehenden Personen werden diese Winkel nur ungefähr eingehalten, wenn die Beleuchtungsquellen fest installiert sind. Dieses Problem wird durch die Vorrichtung 100 dadurch gelöst, indem eine Beleuchtungseinrichtung 122 zur Beleuchtung der Person vorgesehen ist, wobei die Beleuchtungseinrichtung 122 und der Spiegel 104 eine Kopplung 126 aufweisen, wobei die Kopplung 126 dazu ausgebildet ist, automatisch bei der Verschiebung des Spiegels 104 das Leuchtverhalten der Beleuchtungseinrichtung 122 zu steuern

Z.B. kann die Beleuchtungseinrichtung 122 eine Lichtquelle aufweisen, welche synchron zur Bewegung des Spiegels 104 verfahren werden kann. Alternativ oder zusätzlich können mehrere Lichtquellen der Beleuchtungseinrichtung 122 durch die Kopplung 126 so angesteuert werden, dass die Lichtquellen automatisch gewählt werden, welche eine optimale Ausleuchtung des Gesichts 110 unter Minimierung etwaiger Lichtreflexionen an Brillengläsern gewährleistet.

Zusammengefasst ermöglicht also die Vorrichtung 100 mittels einer einzigen Kamera 102 ohne ein Verfahren von schweren Komponenten die Aufnahme stets frontaler Bilder und ist damit kostengünstig und schnell. Die Faltung des Strahlenganges erlaubt außerdem längerbrennweitige Aufnahmesysteme bei kleinen Entfernungen zwischen Person und Aufnahmegerät. Dies ist vorteilhaft, da ISO 19794-5 Clause B.2.15 die Verwendung leichter Teleobjektive von 90-130mm Brennweite (35mm Bild) empfiehlt. Die Verwendung eines Spiegels als "Eyecatcher" ermöglicht eine optimale Benutzerführung und die Verwendung der separaten Beleuchtungssteuerung ermöglicht das Erfassen von reflektionsfreien Bildern auch für Brillenträger.

Vorzugsweise ist eine Steuereinheit 130 vorgesehen, welche unter Verwendung von Signalfolgen und eines Computerprogrammprodukts einen Prozessor so ansteuert, dass dieser entsprechende Auswertungen vornehmen kann, um das o.g. Verfahren durchzuführen. So kann diese Steuereinheit 130 z.B. elektromotorisch die Position der Spiegel 104 und 106 verfahren und außerdem das Leuchtverhalten der Beleuchtungseinrichtung 122 steuern. Die Kopplungen 124 und 126 erfolgen damit über die Steuereinheit 130.

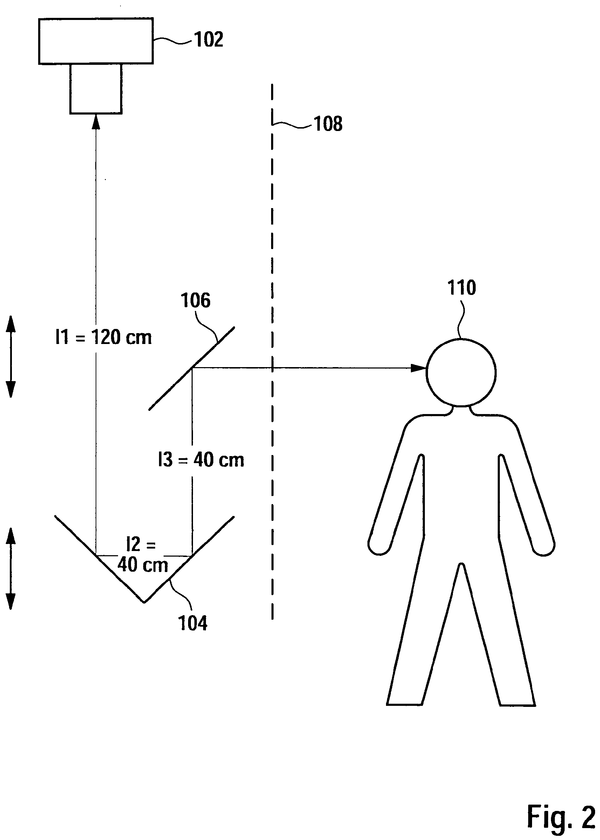

Die Figur 2 zeigt eine schematische Ansicht der Vorrichtung der Figur 1 in einer Einstellung, welche zur Erfassung biometrischer Merkmale einer kleinen Person geeignet ist. Insbesondere wird davon ausgegangen, dass in diesem Beispiel die Person eine Größe von 120cm hat. Ferner wird davon ausgegangen, dass der optische Pfad zwischen Kamera und Gesicht der Person immer 280cm betragen soll. Diese Distanz eignet sich besonders gut, um die Empfehlung der ISO 19794-5 Amendment "Best practices for capturing ..."im Hinblick auf die Verwendung von leichten Teleobjektiven zu erfüllen.

Wie in Fig. 2 ersichtlich ist, wird weiter angenommen, dass der Abstand des Gesichts der Person vom Spiegel 106 konstant 80cm beträgt. Ferner weist der optische Pfad zwischen den Spiegelhälften des 180 Grad Umlenk-Doppelspiegels 104 eine Länge I2 von 40 cm auf. Bei einer Gesamtlänge des optischen Pfades von 280cm muss damit die Summe der Wegstrecken I1 und I3 einen Wert von 160 cm annehmen. Wurde die Position des Spiegels 106 optimal mittig auf das Gesicht der Person 110 eingestellt, ergibt sich bei feststehender Kamera 102 eine Verschiebemöglichkeit des Spiegels 104 dergestalt, dass I1 einen Wert von 120cm einnimmt und I3 einen Wert von 40cm einnimmt.

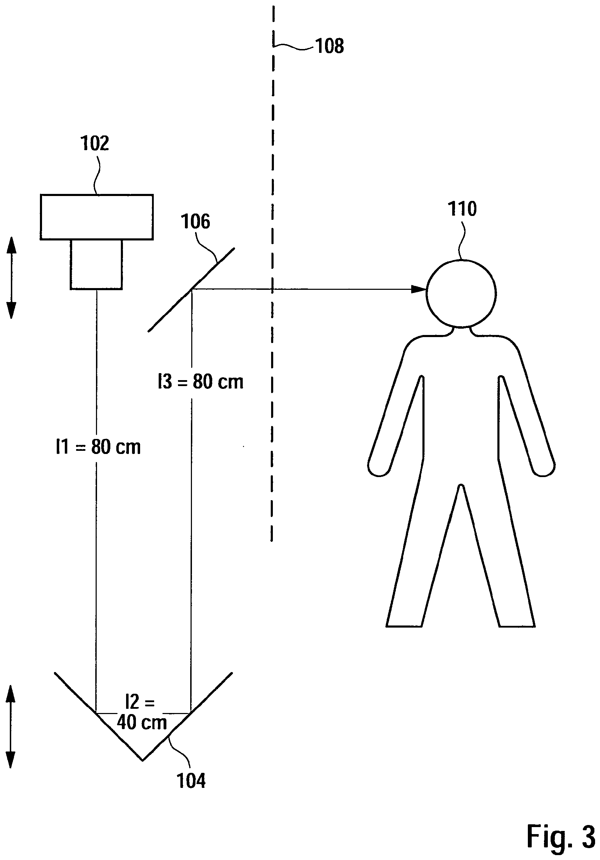

In der Figur 3 ist davon ausgegangen, dass die Person eine Größe von 200 cm hat. Entsprechend wurde im Vergleich zur Figur 2 der Spiegel 106 so weit nach oben verschoben, bis wieder die Position des Spiegels 106 optimal mittig auf das Gesicht der Person 110 eingestellt ist. Aufgrund der größeren Person scheint nun auch die Kamera "näher" an dem Gesicht der Position in vertikaler Richtung gesehen zu sein - die Kamera wurde also nicht verschoben.

Es sei wieder angenommen, dass der Abstand des Gesichts der Person vom Spiegel 106 konstant 80cm beträgt. Bei einem optischen Pfad zwischen Kamera 102 und Gesicht 110 mit einer gewünschten Länge von 280cm, ergibt sich nun damit bei feststehender Kamera 102 eine Verschiebemöglichkeit des Spiegels 104 dergestalt, dass I1 einen Wert von 80cm einnimmt und I3 einen Wert von ebenfalls 80cm einnimmt. Damit ist die Größe des durch die Kamera 102 wahrgenommenen Gesichts der Person 110 dieselbe, wie dies in der Figur 2 der Fall war.

Es sei angemerkt, dass im Prinzip die Spiegel in der Reihenfolge von Spiegel 106, rechtem Spiegel 104 und linkem Spiegel 104 immer kleiner werden können. Der Grund ist, dass aufgrund des wachsenden Abstandes der Spiegel vom Gesicht der Person 110 das am Spiegel jeweils auftreffende Gesichtsbild immer kleiner wird. Unterstellt, dass die Bildhöhe am Gesicht maximal 40cm betragen soll (d.h. das Gesicht ist 40cm im Durchmesser) und an der Kamera 0cm, könnten die Spiegel auf dem Weg dazwischen proportional kleiner werden. Dies Ergäbe am Spiegel 106 eine maximale Bildhöhe von 28,5cm am rechten Spiegel 104 eine maximale Bildhöhe von 23cm und am linken Spiegel eine maximale Bildhöhe von 17cm. Die besagte Höhen bestimmen die maximale Bildhöhe an diesem jeweiligen Spiegel, nicht die Spiegelgröße. Denn in Anbetracht dessen, dass der Spiegel in den Fig. 2 und 3 immer um 45° zur Eingangs-Achse geneigt ist, um den Strahl um 90° abzulenken, ist die Spiegelhöhe dann immer dieser Wert der maximalen Bildhöhe mal Wurzel zwei.

Es sei weiter angemerkt, dass es grundsätzlich möglich ist, dass statt der Verschiebung oder zusätzlich zur Verschiebung des Spiegels 104 auch die Kamera 102 selbst verschoben wird. Wichtig ist jedoch grundsätzlich, dass die Länge des optischen Wegs zwischen Kamera und Gesicht der Person konstant ist, unabhängig von der Stellung des Spiegels 106 und des Abstandes der Person von diesem Spiegel 106.

### Bezugszeichenliste

- 100: Vorrichtung
- 102: Kamera
- 104: Spiegel
- 106: Spiegel
- 108: Semi-transparenter Spiegel
- 110: Gesicht
- 112: Seite
- 114: Strahlengang
- 116: Strahlengang
- 118: Seite
- 120: Strahlengang
- 122: Beleuchtungseinrichtung
- 124: Kopplung
- 126: Kopplung
- 128: Markierung
- 130: Steuereinheit

### Bezugszeichenliste

- 100: Vorrichtung
- 102: Kamera
- 104: Spiegel
- 106: Spiegel
- 108: Semi-transparenter Spiegel
- 110: Gesicht
- 112: Seite
- 114: Strahlengang
- 116: Strahlengang
- 118: Seite
- 120: Strahlengang
- 122: Beleuchtungseinrichtung
- 124: Kopplung
- 126: Kopplung
- 128: Markierung
- 130: Steuereinheit

## Patentansprüche

1. Vorrichtung (100) zur Erfassung biometrischer Merkmale eines Gesichts (110) einer Person, wobei die Vorrichtung (100) eine Kamera (102) zur Erfassung der biometrischen Merkmale und einen semi-transparenten Spiegel (108) aufweist, wobei der semi-transparente Spiegel (108) zwischen der Person und der Kamera (102) angeordnet ist, wobei der semi-transparente Spiegel (108) so ausgerichtet ist, dass auf der Person zugewandten Seite (112) des semi-transparenten Spiegels (108) der Strahlengang (114) von auf den semi-transparenten Spiegel (108) einfallenden Lichts parallel ist zum Strahlengang (116) des vom semi-transparenten Spiegel (108) zurück reflektierten Teil dieses Lichts, ferner mit einer ersten (104) und einer zweiten (106) Spiegelanordnung (106), wobei die zweite Spiegelanordnung (106) auf der von der Person abgewandten Seite (118) des semi-transparenten Spiegels (108) so angeordnet ist, dass der auf die zweite Spiegelanordnung (106) fallende durch den semi-transparenten Spiegel (108) transmittierte Teil (120) des Lichts auf die erste Spiegelanordnung (104) gelenkt wird, wobei die erste Spiegelanordnung (104) so angeordnet ist, dass dieser auf die erste Spiegelanordnung (104) gelenkte transmittierte Teil des Lichts auf die Kamera (102) reflektiert wird, wobei die erste Spiegelanordnung (104) und/oder die zweite Spiegelanordnung (106) parallel verschiebbar ist zum Strahlengang des vom semi-transparenten Spiegel (108) transmittierten Teil des Lichts zwischen der ersten Spiegelanordnung und der zweiten Spiegelanordnung (106).

2. Vorrichtung (100) nach Anspruch 1, wobei die erste Spiegelanordnung (104) und die zweite Spiegelanordnung (106) eine erste Kopplung (124) aufweisen, wobei die erste Kopplung (124) dazu ausgebildet ist, automatisch bei der Verschiebung der zweiten Spiegelanordnung (106) die erste Spiegelanordnung (104) so zu verschieben, dass der optische Abstand zwischen der zweiten Spiegelanordnung (106) und der Kamera (102) konstant ist.

3. Vorrichtung (100) nach Anspruch 1, wobei die erste Spiegelanordnung (104) bei konstanter Position der zweiten Spiegelanordnung (106) automatisch so verschiebbar ist, dass
- der optische Abstand zwischen dem Gesicht (110) der Person und der Kamera (102) einem vorgegebenen Wert entspricht und/oder
- die Größe des durch die Kamera (102) erfassten Gesichtsbildes der Person zur Erfassung der biometrischen Merkmale einem vorgegeben Wert entspricht.

4. Vorrichtung (100) nach Anspruch 2 oder 3, ferner mit einer Beleuchtungseinrichtung (122) zur Beleuchtung der Person, wobei die Beleuchtungseinrichtung (122) und die erste Spiegelanordnung (104) eine zweite Kopplung (126) aufweisen, wobei die zweite Kopplung (126) dazu ausgebildet ist, automatisch bei der Verschiebung der ersten Spiegelanordnung (104) das Leuchtverhalten der Beleuchtungseinrichtung (122) zu steuern.

5. Verfahren zur Erfassung biometrischer Merkmale eines Gesichts (110) einer Person mittels einer Kamera (102) zur Erfassung der biometrischen Merkmale, einem semi-transparenten Spiegel (108), einer ersten (104) und einer zweiten (106) Spiegelanordnung (106), wobei das Verfahren folgende Schritte aufweist:
- Anordnen des semi-transparenten Spiegels (108) zwischen der Person und der Kamera (102);
- Ausrichten des semi-transparenten Spiegel (108) so, dass auf der Person zugewandten Seite des semi-transparenten Spiegels (108) der Strahlengang von auf den semi-transparenten Spiegel (108) einfallenden Lichts parallel ist zum Strahlengang des vom semi-transparenten Spiegel (108) zurück reflektierten Teil dieses Lichts;
- Anordnen der zweiten Spiegelanordnung (106) auf der von der Person abgewandten Seite (118) des semi-transparenten Spiegels (108) derart, dass der auf die zweite Spiegelanordnung (106) fallende durch den semi-transparenten Spiegel (108) transmittierte Teil (120) des Lichts auf die erste Spiegelanordnung (104) gelenkt wird;
- Anordnen der ersten Spiegelanordnung (104) derart, dass der von der zweiten Spiegelanordnung darauf gelenkte transmittierte Teil des Lichts auf die Kamera (102) reflektiert wird; und
- Verschieben der ersten Spiegelanordnung (104) und/oder zweiten Spiegelanordnung (106) in einer Richtung parallel zum Strahlengang des vom semi-fransparenten Spiegel (108) transmittierten Teil des Lichts zwischen der ersten Spiegelanordnung und der zweiten Spiegelanordnung (106).

## Claims

1. A device (100) for capturing biometric features of a person's face (110), wherein the device (100) comprises a camera (102) for capturing the biometric features and a semi-transparent mirror (108), wherein the semi-transparent mirror (108) is arranged between the person and the camera (102), wherein the semi-transparent mirror (108) is oriented such that, on the side (112) of the semi-transparent mirror (108) facing the person, the beam path (114) of light incident on the semi-transparent mirror (108) is parallel to the beam path (116) of the portion of this light reflected back from the semi-transparent mirror (108), said device further comprising a first (104) and a second (106) mirror arrangement (106), wherein the second mirror arrangement (106) is arranged on the side (118) of the semi-transparent mirror (108) facing away from the person, such that the portion (120) of the light transmitted through the semi-transparent mirror (108) and incident on the second mirror arrangement (106) is directed onto the first mirror arrangement (104), wherein the first mirror arrangement (104) is arranged such that this transmitted portion of the light directed onto the first mirror arrangement (104) is reflected onto the camera (102), wherein the first mirror arrangement (104) and/or the second mirror arrangement (106) are/is displaceable, parallel to the beam path of the portion of the light transmitted from the semi-transparent mirror (108), between the first mirror arrangement and the second mirror arrangement (106).

2. The device (100) according to Claim 1, wherein the first mirror arrangement (104) and the second mirror arrangement (106) have a first coupling (124), wherein the first coupling (124) is designed to automatically displace the first mirror arrangement (104) as the second mirror arrangement (106) is displaced, such that the optical distance between the second mirror arrangement (106) and the camera (102) is constant.

3. The device (100) according to Claim 1, wherein the first mirror arrangement (104), with constant position of the second mirror arrangement (106), is automatically displaceable such that
- the optical distance between the person's face (110) and the camera (102) corresponds to a predefined value and/or
- the size of the facial image of the person captured by the camera (102) in order to capture the biometric features corresponds to a predefined value.

4. The device (100) according to Claim 2 or 3, further comprising a lighting arrangement (122) for lighting the person, wherein the lighting arrangement (122) and the first mirror arrangement (104) have a second coupling (126), wherein the second coupling (126) is designed to automatically control the luminescent behaviour of the lighting arrangement (122) as the first mirror arrangement (104) is displaced.

5. A method for capturing biometric features of a person's face (110) by means of a camera (102) for capturing the biometric features, a semi-transparent mirror (108), a first (104) and a second (106) mirror arrangement (106), wherein the method comprises the following steps:
- arranging the semi-transparent mirror (108) between the person and the camera (102),
- orienting the semi-transparent mirror (108) such that, on the side of the semi-transparent mirror (108) facing the person, the beam path of light incident on the semi-transparent mirror (108) is parallel to the beam path of the portion of this light reflected back from the semi-transparent mirror (108);
- arranging the second mirror arrangement (106) on the side (118) of the semi-transparent mirror (108) facing away from the person, in such a way that the portion (120) of the light transmitted through the semi-transparent mirror (108) and incident on the second mirror arrangement (104) is directed onto the first mirror arrangement (104);
- arranging the first mirror arrangement (104) in such a way that the transmitted portion of the light directed onto the first mirror arrangement from the second mirror arrangement is reflected onto the camera (102); and
- displacing the first mirror arrangement (104) and/or second mirror arrangement (106), in a direction parallel to the beam path of the portion of the light transmitted from the semi-transparent mirror (108), between the first mirror arrangement and the second mirror arrangement (106).

## Revendications

1. Dispositif (100) de détection de caractéristiques biométriques d'un visage (110) d'une personne, où le dispositif (100) présente une caméra (102) pour la détection des caractéristiques biométriques et un miroir (108) semi transparent, où le miroir (108) semi-transparent est disposé entre la personne et la caméra (102), où le miroir (108) semi-transparent est agencé pour que, sur le côté (112) du miroir (108) semi-transparent orienté vers la personne, le trajet du rayon (114) de la lumière tombant sur le miroir (108) semi-transparent est parallèle au trajet du rayon (116) de la partie de cette lumière réfléchie par le miroir (108) semi-transparent, en outre doté d'un premier (104) et d'un deuxième (106) ensemble de miroirs (106), où le deuxième ensemble de miroirs (106) est disposé de telle manière sur le côté (118) du miroir (108) semi-transparent opposé à la personne que la partie transmise (120) de la lumière par le miroir (108) semi-transparent tombant sur le deuxième ensemble de miroirs (106) est déviée sur le premier ensemble de miroirs (104), où le premier ensemble de miroirs (104) est disposé de telle manière que cette partie de lumière transmise déviée sur le premier ensemble de miroirs (104) est réfléchie sur la caméra (102), où le premier ensemble de miroirs (104) et/ou le deuxième ensemble de miroirs (106) peuvent être déplacés parallèlement par rapport au trajet du rayon de la partie de la lumière transmise par le miroir (108) semi-transparent entre le premier ensemble de miroirs et le deuxième ensemble de miroirs (106).

2. Dispositif (100) selon la revendication 1, dans lequel le premier ensemble de miroirs (104) et le deuxième ensemble de miroirs (106) présentent un premier couplage (124), où le premier couplage (124) est conçu pour déplacer automatiquement, lors du déplacement du deuxième ensemble de miroirs (106), le premier ensemble de miroirs (104) de telle manière que la distance optique entre le deuxième ensemble de miroirs (106) et la caméra (102) est constante.

3. Dispositif (100) selon la revendication 1, dans lequel le premier ensemble de miroirs (104) peut être déplacé automatiquement pour une position constante du deuxième ensemble de miroirs (106) de telle manière que
- la distance optique entre le visage (110) de la personne et la caméra (102) correspond à une valeur prédéfinie et/ou
- la taille de l'image du visage de la personne prise par la caméra (102) correspond à une valeur prédéfinie pour la détection des caractéristiques biométriques.

4. Dispositif (100) selon la revendication 2 ou 3, doté en outre d'un système d'éclairage (122) pour l'éclairage de la personne, où le système d'éclairage (122) et le premier ensemble de miroirs (104) présentent un deuxième couplage (126), où le deuxième couplage (126) est conçu pour commander automatiquement, lors du déplacement du premier ensemble de miroirs (104), le comportement en éclairage du système d'éclairage (122).

5. Procédé de détection de caractéristiques biométriques d'un visage (110) d'une personne au moyen d'une caméra (102) pour la détection des caractéristiques biométriques, d'un miroir (108) semi-transparent, d'un premier (104) et d'un deuxième (106) ensemble de miroirs (106), où le procédé présente les étapes suivantes :
- disposition du miroir (108) semi-transparent entre la personne et la caméra (102) ;
- agencement du miroir (108) semi-transparent de telle manière que, sur le côté du miroir (108) semi-transparent orienté vers la personne, le trajet du rayon de lumière tombant sur le miroir (108) semi-transparent est parallèle au trajet de rayon de la partie de cette lumière réfléchie par le miroir (108) semi-transparent ;
- disposition du deuxième ensemble de miroirs (106) sur le côté (118) du miroir (108) semi-transparent opposé à la personne de telle manière que la partie (120) de la lumière tombant sur le deuxième ensemble de miroirs (106) transmise par le miroir (108) semi-transparent est déviée sur le premier ensemble de miroirs (104) ;
- disposition du premier ensemble de miroirs (104) de telle manière que la partie de la lumière transmise par le deuxième ensemble de miroirs déviée sur celui-ci est réfléchie sur la caméra (102) ; et
- déplacement du premier ensemble de miroirs (104) et/ou du deuxième ensemble de miroirs (106) dans une direction parallèle au trajet de rayon de la partie de la lumière transmise du miroir (108) semi-transparent entre le premier ensemble de miroirs et le deuxième ensemble de miroirs (106).
